(19) **Europäisches Patentamt**

**European Patent Office**

**Office européen des brevets**

(11) Publication number: **0 076 071**
**B1**

(12) **EUROPEAN PATENT SPECIFICATION**

(45) Date of publication of patent specification: **25.02.87**

(51) Int. Cl.⁴: **G 01 K 7/22**

(21) Application number: **82304927.5**

(22) Date of filing: **17.09.82**

(54) **Temperature sensing device.**

(30) Priority: **24.09.81 JP 151848/81**

(43) Date of publication of application:
**06.04.83 Bulletin 83/14**

(45) Publication of the grant of the patent:
**25.02.87 Bulletin 87/09**

(84) Designated Contracting States:
**AT BE DE FR IT NL SE**

(56) References cited:
**US-A-3 485 102**
**US-A-3 513 432**
**US-A-4 148 005**
**US-A-4 237 731**

**IEEE TRANSACTIONS ON MICROWAVE THEORY AND TECHNIQUES, vol. MTT-24, no. 1, January 1976, pages 43-45, New York, US R.R. BOWMAN: "A probe for measuring temperature in radio-frequency-heated material"**

(73) Proprietor: **JUNKOSHA CO. LTD.**
**25-25, Miyasaka 2-chome**
**Setagaya-ku Tokyo156 (JP)**

(72) Inventor: **Kobayashi, Satoru**
**927-3 Nakazawa Ohwaza-Takahagi**
**Hitaka-machi Iruma-gun (JP)**
Inventor: **Sato, Yoshiaki**
**322 Umahikizawa Hidaka-machi**
**Iruma-gun Saitama (JP)**
Inventor: **Suzuki, Hirosuke**
**4-21-8 Kotesashi-cho**
**Tokorozawa Saitama (JP)**

(74) Representative: **Taylor, Derek George et al**
**Mathisen, Macara & Co. The Coach House 6-8**
**Swakeleys Road**
**Ickenham Uxbridge UB10 8BZ (GB)**

(56) References cited:
**IEEE TRANSACTIONS ON BIOMEDICAL ENGINEERING, vol. BME-27, no. 5, May 1980, pages 242-248, New York, US D.C. JEUTTER et al.: "A modular expandable implantable temperature biotelemeter"**
**Proceedings of the IEEE, Volume 55, pages 970 to 981 June 1967**

## Description

The present invention relates to a temperature sensor for use in a human body.

Hyperthermic therapy uses microwave radiation to heat body tissues up to 41 to 43 degrees Celsius for destroying cancer cells. It is necessary in such therapy to embed a temperature sensor in the body to measure an actual body temperature for effective destruction of cancer cells. Known temperature sensors, however, tend to undergo microwave heating, and to reflect microwaves, resulting in false temperature readings and a lowered therapeutic efficiency.

It is known from US—A—4237731 to provide a temperature sensing probe for microwave ovens, comprising an electrical temperature sensing element connected to one end of each of two narrow, elongate, high-resistance conductors disposed on the surface of an insulating substrate. However, such a probe is not suitable for use in a human body, and suffers the disadvantages of microwave heating and reflection identified above.

It is known from IEEE Transactions onMicrowave Theory and Techniques January 1976 pp. 43 to 45 to provide a probe for insertion into human body tissue which comprises a small high-resistance thermistor to which is connected pairs of plastic high-resistance leads developed earlier for use with electromagnetic hazard meters. Reference is also made to the possibility of using leads utilising carbon-loaded material.

The above article also refers to the Proceedings of the IEEE June 1967 pp. 970—981 at pp. 978—979 which describes the calibration of field-strength meters and the use of R.F. transmission lines of a material which is basically polytetrafluoroethylene rendered "semiconducting" by uniformly dispensing finely divided carbon black (approximately 30% by weight) throughout the plastic while it is in the semifluid state during its manufacture, the conductors being in the form of 0.76 mm diameter monofilaments. ·

According to the present invention there is provided a temperature sensor adapted for insertion into a human body, comprising an electrical temperature sensing element connected to one end of each of two narrow, elongate, high-resistance conductors made of electrically conductive fluorine resin, the temperature sensing element being sensitive to temperatures of the human body undergoing hyperthermic therapy, characterised in that the conductors are disposed on the surface of an insulating substrate which is a body of electrically non-conductive fluorine resin.

With this arrangement one obtains the advantages that the lead members undergo virtually no heating due to the applied electromagnetic radiation and the sensor does not give false temperature readings and does not reflect electromagnetic radiation. Since the high-resistance electrical conductors are made of conductive fluorine resin, they not only bring about these advantages but also they avoid rejection by body tissues when embedded in a human body. The conductive fluorine resin may have a core or reinforcement made of stretched porous tetrafluoroethylene resin having high tensile strength. In addition, the electrical temperature sensing element may be enclosed in a liquid-tight casing of fluorine resin, so that adverse effects of body tissues on temperature detection can be avoided, and no physical disorder of body tissues will be caused by the electrical temperature sensing element embedded therein.

The invention will now be particularly described by way of example with reference to the accompanying drawings in which:

Figure 1 is a perspective view of a temperature sensor according to one embodiment of the present invention;

Figure 2 is a fragmentary perspective view of a temperature sensor according to another embodiment of the present invention; and

Figure 3 is a graph showing a temperature vs. time characteristic of a typical embodiment.

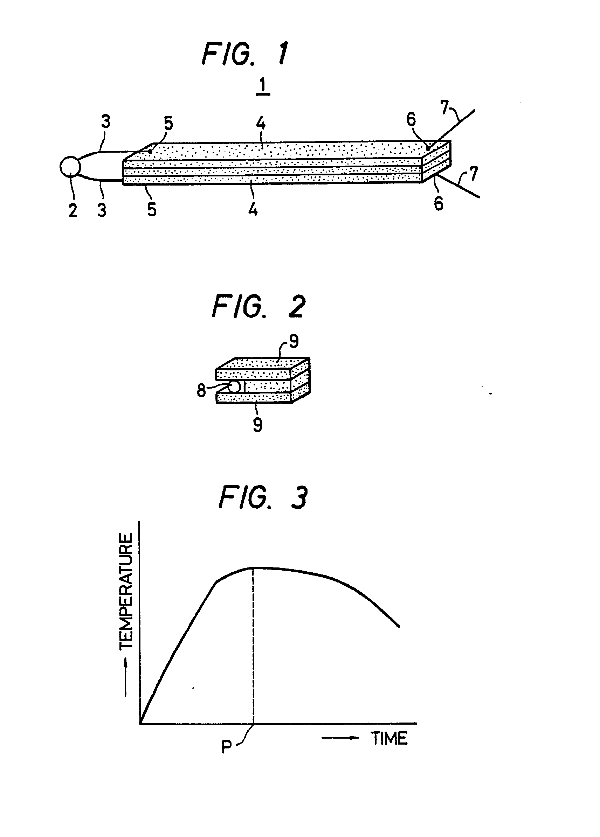

As shown in figure 1, a temperature sensor 1 comprises a thermistor 2 serving as an electrical temperature sensing element and having metal connectors 3 which are electrically connected by conductive adhesive 5 to high-resistance conductors 4 made of conductive fluorine resin. The conductive resin 5 may for example be composed of Silver Composition No. 4817 manufactured by E.I.Dupont de Nemours & Co., U.S.A., or "DO-TITE" (Trade Mark) manufactured by Fujikura Kasei K.K., Japan.

The high-resistance fluorine resin conductors 4 are in the form of sheets having a thickness of 0.1 mm and a width of 0.4 mm and thermally fused to both surfaces of a sheet of electrically non-conductive tetrafluoroethylene resin having a thickness of 0.2 mm and a width of 0.4 mm. The sheet of tetrafluoroethylene resin may be fabricated by a method as described in Japanese Patent Publication No. 41-18991, for example. The fluorine resin conductors 4 are also fabricated by substantially the same method, using tetrafluoroethylene resin, containing a filler such as carbon black. In order to make the conductors, carbon black or other fillers can be introduced into tetrafluoroethylene resin either by mixing carbon black with a tetrafluoroethylene resin dispersion and coagulating the mixture, or by mixing carbon black with finely powdered tetrafluoroethylene resin by means of a mechanical blender.

The carbon black used may comprise KET-JENBLACK (Registered Trade Mark) EC manufactured by Akzo Chemie GmbH, Netherlands. To form the assembly shown in Figure 1, a mass of tetrafluoroethylene resin containing 20% by weight of carbon black as a filler is formed into a sheet having a thickness of 0.1 mm. The sheet, which forms a conductive body 4, is thermally fused under pressure to each surface of a separately fabricated sheet of electrically non-conductive tetrafluoroethylene resin which is 0.2 mm thick. The three-layer lamination is cut into a

piece having a width of 0.4 mm as illustrated in Figure 1. The conductive fluorine resin body 4 has a length of 300 mm and an electrical resistance of 25 kilohms. It is preferable that the length of the conductive fluorine resin body 4 be within a range subjected to electromagnetic waves applied, and the body 4 be connected at its ends by conductive adhesive 6 to metal lead members 7 for electrical connection to a temperature measuring unit (not shown).

The metal connectors 3 leading from the thermistor 2 should be as short as possible to reduce self-heating and electromagnetic wave reflections. To this end, a thermistor 8 may be sandwiched for electrical connection between a pair of conductive fluorine resin bodies 9, 9 as shown in Figure 2.

The thermistor or electrical temperature sensing element and the connectors or lead members are encased for liquid-tight sealing in a mass of non-conductive fluorine resin, which is less likely to be rejected by the human body, such as tetrafluoroethylene resin or a copolymer of tetrafluoroethylene-perfluoroalkylvinylether. Thus, body liquids are prevented from finding their way into the electrical temperature sensing element, and the electrical temperature sensing element and lead members when embedded in a human body are less likely to be rejected by the human body.

Using a thermistor having a negative temperature coefficient of 5 megohms at 20 degrees Celsius, a temperature sensor having an outside diameter of 0.9 mm was fabricated. Three such temperature sensors were embedded by a dwelling needle at depths of 5, 10, 20 mm respectively, in a model of a human body having the same characteristics as those of human body tissues with respect to electromagnetic waves applied. An antenna for radiating electromagnetic waves, having a circular shape of a diameter of 40 mm, was brought into contact with an outer surface of the model, which was irradiated with electromagnetic waves of 10 W to 30 W at a frequency of 2.45 GHz. The model was subjected to a temperature rise as illustrated in Figure 3. When the electromagnetic radiation was turned off at a time P in the temperature range from 25 to 50 degrees Celsius of the model, the temperatures as indicated by the temperature sensors of the present invention showed no abrupt drop at a resolution of 0.1 degree Celsius. This result confirmed that the temperature sensors of the invention were not adversely affected by electromagnetic waves applied. The lead members are permeable to x-rays.

With the arrangement of the invention, the temperature sensor does not cause electromagnetic wave reflections and temperature detection errors when placed in an electromagnetic field. The temperature sensor is not likely to be rejected by human body tissues.

Although certain preferred embodiments have been shown and described in detail, it should be understood that various changes and modifications may be made therein without departing from the scope of the appended claims. For example, a thermocouple or other temperature-sensitive device may be used as an electrical temperature sensing element. Furthermore, a four-terminal arrangement may be employed in which four mutually insulated high-resistance conductors are used as lead members, and two out of the four conductors are utilized for passage therethrough of a current, with the remaining two conductors used for measuring a voltage.

## Claims

1. A temperature sensor (1) adapted for insertion into a human body, comprising an electrical temperature sensing element (2) connected to one end (5) of each of two narrow, elongate, high-resistance conductors (4) made of electrically conductive fluorine resin, the temperature sensing element (2) being sensitive to temperatures of the human body undergoing hyperthermic therapy, characterized in that the conductors are disposed on the surface of an insulating substrate which is a body of electrically non-conductive fluorine resin.

2. A temperature sensor according to claim 1, characterised in that said two conductors (9, Fig. 2) are disposed in confronting relation on opposite sides of said body of fluorine resin, said electrical temperature sensing element (8, Fig. 2) being sandwiched between said two conductors at one end of said body.

3. A temperature sensor according to claim 1 or claim 2, characterized in that said electrical temperature sensing element (2) is connected with four said high resistance conductors (4) which extend from said element in mutually insulated relationship, two of the four conductors serving to pass a current therethrough and the remaining two conductors serving to measure a voltage.

4. A temperature sensor according to any one of the preceding claims characterized in that said electrical temperature sensing element (2) and said conductors (4) are encased in a liquid-tight body of non-conductive fluorine resin.

## Patentansprüche

1. Temperaturfühler (1), geeignet zur Einführung in einen menschlichen Körper, mit einem elektrischen Temperaturfühlerelement (2), das mit einem Ende (5) eines jeden von zwei schmalen, hochohmigen Leitern (4) verbunden ist, die aus elektrisch leitendem Fluorkunstharz hergestellt sind, wobei das Temperaturfühlerelement (2) für Temperaturen des menschlichen Körpers empfindlich ist, der eine hyperthermische Behandlung erfährt, dadurch gekennzeichnet, daß die Leiter auf der Oberfläche eines isolierenden Substrats angeordnet sind, das ein Körper aus elektrisch nicht-leitendem Fluorkunstharz ist.

2. Temperaturfühler nach Anspruch 1, dadurch gekennzeichnet, daß die zwei Leiter (9, Fig. 2) einander gegenüberliegend an entgegengesetzten Seiten des Körpers aus Fluorkunstharz angeordnet sind, wobei das elektrische Temperaturfühlerelement (8, Fig. 2) sandwichartig zwischen den zwei Leitern an einem Ende des Körpers angeordnet ist.

3. Temperaturfühler nach Anspruch 1 oder Anspruch 2, dadurch gekennzeichnet, daß das elektrische Temperaturfühlerelement (2) mit vier hochohmigen Leitern (4) verbunden ist, die sich vom genannten Element gegeneinander isoliert erstrecken, wobei zwei der vier Leiter zum Hindurchleiten von Strom und die übrigen zwei Leiter zur Messung einer Spannung dienen.

4. Temperaturfühler nach einem der vorhergehenden Ansprüche, dadurch gekennzeichnet, dass das elektrische Temperaturfühlerelement (2) und die Leiter (4) in einem flüssigkeitsdichten Körper eines nicht-leitenden Fluorkunstharzes eingeschlossen sind.

**Revendications**

1. Détecteur de température (1) adapté pour être inséré dans le corps humain, comprenant un élément détecteur de température électrique (2) connecté à une extrémité (5) de l'un et l'autre de deux conducteurs étroits, allongés, à haute résistance (4), réalisés à base d'une résine fluorée électriquement conductrice, l'élément détecteur de température (2) étant sensible aux températures du corps humain subissant une thérapie hyperthermique, caractérisé en ce que les conducteurs sont disposés sur la surface d'un support isolant qui est un corps en résine fluorée électriquement non conductrice.

2. Détecteur de température suivant la revendication 1, caractérisé en ce que les deux conducteurs (9, figure 2) sont disposés dans une position relative opposée sur des faces opposées du corps en résine fluorée, ledit élément détecteur de température électrique (8, figure 2) étant situé en sandwich entre lesdits deux conducteurs à une extrémité dudit corps.

3. Détecteur de température suivant l'une des revendications 1 et 2, caractérisé en ce que l'élément détecteur de température électrique (2) est connecté à quatre conducteurs à haute résistance (4) qui s'étendent depuis ledit élément dans une position relative mutuellement isolée, deux des quatre détecteurs servant au passage du courant à travers eux et les deux conducteurs restants servant à une mesure de tension.

4. Détecteur de température suivant l'une quelconque des revendications précédentes, caractérisé en ce que l'élément électrique détecteur de température (2) et les conducteurs (4) sont logés dans un corps étanche aux liquides, fait d'une résine fluorée non conductrice.

## FIG. 1

## FIG. 2

## FIG. 3